# EUROPEAN PATENT APPLICATION

(11) **EP 2 762 396 A1**
(43) Date of publication of application: **06.08.2014**
(21) Application number: 13167527.4
(22) Date of filing: 13.05.2013
(51) Int. Cl.: B62M 9/04, B62M 9/06, B62M 9/08

(54) **Continuosly variable transmission**

(30) Priority: 04.02.2013 KR 20130012341
(71) Applicant: An, Yeong-Mi, Daejeon 305-769 (KR)
(72) Inventor: Nam, Gi-Uk, 305-769 Daejeon (KR)
(74) Representative: Gille Hrabal

(57) **Abstract**

Disclosed herein is a continuously variable transmission including first pulleys; second pulleys; a belt; and first elastic members. Therefore, a pair of movable pulleys are used at a driving shaft and a driven shaft, thereby making it possible to decrease a torque difference between the pulleys, the movable pulleys are rotated in the same direction as a rotation direction of the belt by the elastic members to minimize a slip between the movable pulleys and the belt, thereby making it possible to prevent power loss, and a situation in which a driver should apply excessive force to a pedal at the time of start or at the time of driving in a slope or the driver should perform a transmission operation one by one may be solved.

## Description

### CROSS REFERENCE TO RELATED APPLICATION

This application claims the benefit of Korean Patent Application No. 10-2013-00012341, filed on February 4, 2013, entitled "Continuously Variable Transmission", which is hereby incorporated by reference in its entirety into this application.

### BACKGROUND OF THE INVENTION

### 1. Technical Field

The present invention relates to a continuously variable transmission, and more particularly, to a continuously variable transmission in which a pair of movable pulleys is used at a driving side and a driven side to adjust a pulley interval, the movable pulleys are rotated in the same direction as a rotation direction of a belt by elastic members, and a pulley interval of the driving side or the driven side increases or decreases according to a magnitude of a load torque to allow transmission to be automatically implemented.

### 2. Description of the Related Art

Generally, most of the transmissions for a bicycle use a multi-stage sprocket and a chain to have a discontinuous rotating speed ratio.

Since the sprocket and the chain are driven in a state in which they are engaged with each other, power may be securely transferred. However, a driver should judge by oneself according to a driving condition to adjust transmission, and the chain is entangled in the sprocket due to lack of transmission experience in the case in which an unskilled operator operates the transmission, such that a safety accident occurs.

In order to solve these problems, various types of continuously variable transmissions such as a V belt driving scheme, a spherical difference driving scheme, or the like, have been suggested.

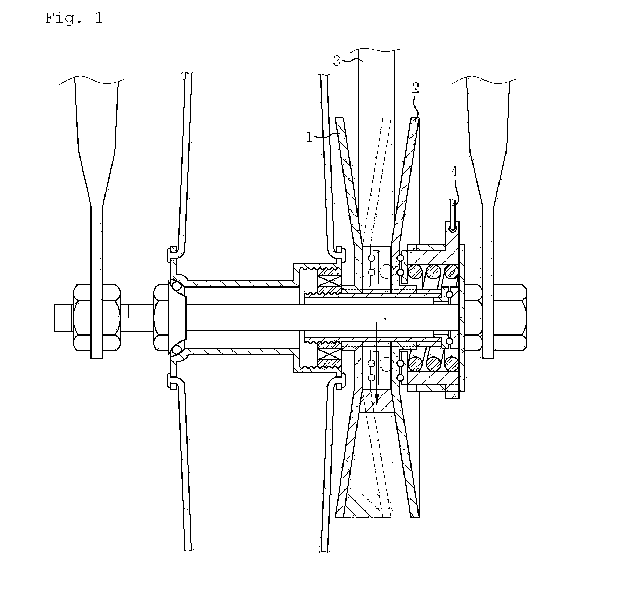

A continuously variable transmission for a bicycle in a V belt driving scheme according to the related art has been disclosed in 'Patent Document 1'. The continuously variable transmission for a bicycle in a V belt driving scheme includes a fixed pulley 1 and a movable pulley 2 disposed to face each other so that a distance (hereinafter, referred to as 'a pulley interval') between pulleys of a driving side and a driven side becomes narrower toward the center of a shaft, as shown in FIG. 1. When a pedal is rotated, a driving shaft is driven, and a belt 3 is closely adhered to and is wound around the pulley of the driving side by frictional force to transfer power to the driven side, thereby rotating the back wheel. In this configuration, a distance r from the shaft to the belt 3 corresponds to an effective radius. As the movable pulley 2 is moved in an axial direction, the pulley interval is changed, such that the effective radius of the belt is changed.

In the continuously variable transmission for a bicycle in a V belt driving scheme according to the related art, in order to move the movable pulley 2 in the axial direction, a bicycle handle and movable pulleys 2 of the driving side and the driven side are connected to each other by a cable 4, and the movable pulleys 2 of the driving side and the driven side are moved as opposed to each other by the cable according to rotation of the handle to implement continuously variable transmission.

However, in the continuously variable transmission for a bicycle in a V belt driving scheme as described above, a driver should perform a transmission operation using the handle. In addition, in the case in which an appropriate transmission operation is not performed according to a driving situation as in the case in which a pedal is excessively pressed in a steep slope in a state in which the pulley interval of the driving side is set to be narrow, a slip occurs between the pulley and the belt, such that power is not certainly transferred from the driving side to the driven side.

Therefore, the present applicant has filed a continuously variable transmission for a bicycle (Korean Patent Application No. 10-2012-006030) in order to solve the above-mentioned problems. However, in the continuously variable transmission for a bicycle disclosed in Korean Patent Application No. 10-2012-006030, since a movable pulley and a fixed pulley are disposed on the same shaft, a difference between rotational forces transferred from a shaft to each of the movable pulley and the fixed pulley occurs, such that a torque difference between the movable pulley and the fixed pulley occurs. Therefore, a slip occurs between the movable pulley and a belt and the fixed pulley and the belt. In addition, when the movable pulley installed at a driven shaft moves in an axial direction, force is applied to the movable pulley in an opposite direction to a direction in which the belt is rotated, such that the slip further occurs between the movable pulley and the belt.

### [Related Art Document]

### [Patent Document]

### (Patent Document 1) KR 2001-0106046 A (November 11, 2001)

### SUMMARY OF THE INVENTION

An object of the present invention is to provide a continuously variable transmission in which a pair of movable pulleys is used at a driving side and a driven side to adjust a pulley interval, the movable pulleys are rotated in the same direction as a rotation direction of a belt by elastic members, and a pulley interval of the driving side or the driven side increases or decreases according to a magnitude of a load torque to allow transmission to be automatically implemented.

According to an exemplary embodiment of the present invention, there is provided a continuously variable transmission including: first pulleys coupled to a first shaft; second pulleys coupled to a second shaft; a belt connected to the first pulleys and the second pulleys; and first elastic members elastically limiting movement of the first pulleys in an axial direction, wherein any one of the first shaft and the second shaft has driving force transferred thereto, and the first pulleys are a pair of movable pulleys.

The movable pulleys may be rotated in the same direction as a rotation direction of the belt by the elastic members.

### BRIEF DESCRIPTION OF THE DRAWINGS

FIG. 1 is a cross-sectional view showing a pulley of a continuously variable transmission for a bicycle using a belt driving scheme according to the related art;
FIG. 2 is a schematic view of a continuously variable transmission according to the present invention;
FIGS. 3A and 3B are cross-sectional views of the continuously variable transmission according to the present invention;
FIG. 4 is a cross-sectional perspective view of a movable pulley of the continuously variable transmission according to the present invention;
FIG. 5 is an exploded perspective view showing the continuously variable transmission according to the present invention;
FIGS. 6A and 6B are schematic views showing a continuous variable transmission process of the continuously variable transmission according to the present invention;
FIG. 7 is a front view showing the continuous variable transmission including an idler according to the present invention;
FIGS. 8A and 8B are views showing a continuously variable transmission according to a first exemplary embodiment of the present invention; and
FIGS. 9A and 9B are views showing a continuously variable transmission according to a second exemplary embodiment of the present invention.

### DESCRIPTION OF THE PREFERRED EMBODIMENTS

Hereinafter, a continuously variable transmission according to the present invention will be described in more detail with reference to the accompanying drawings.

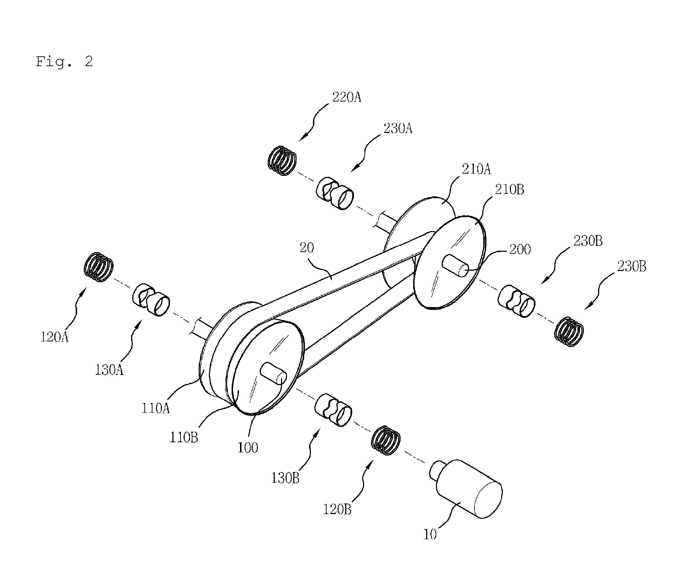

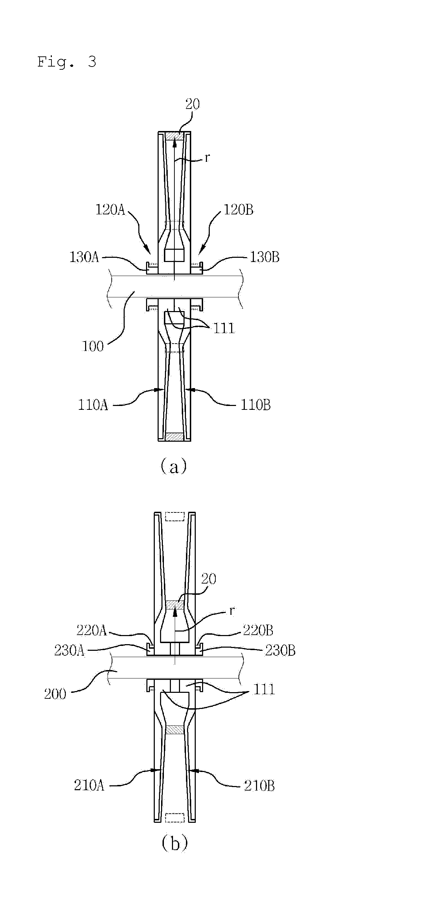

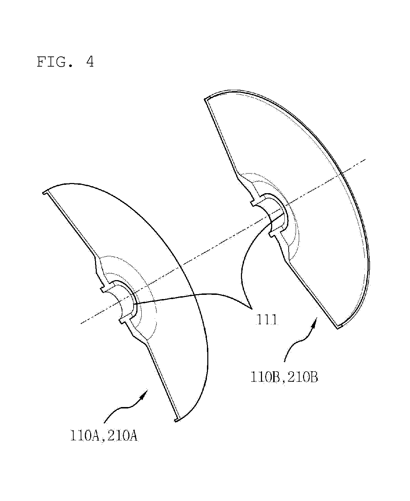

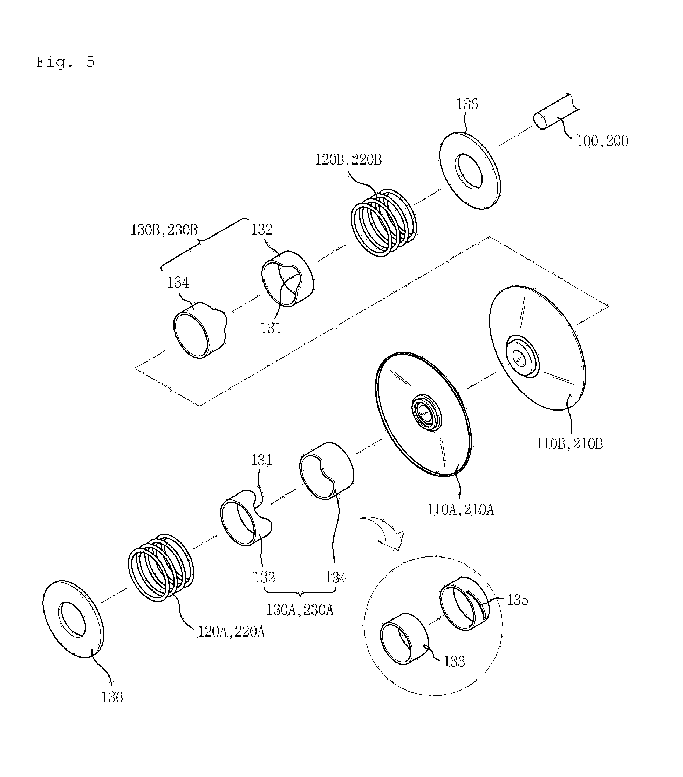

The present invention relates to a continuously variable transmission. FIG. 2 is a schematic view of a continuously variable transmission according to the present invention; FIGS. 3A and 3B are cross-sectional views of the continuously variable transmission according to the present invention; FIG. 4 is a cross-sectional perspective view of a movable pulley of the continuously variable transmission according to the present invention; and FIG. 5 is an exploded perspective view showing the continuously variable transmission according to the present invention.

The continuously variable transmission according to the present invention is configured to include first pulleys 110A and 110B coupled to a first shaft 100; second pulleys 210A and 210B coupled to a second shaft 200; a belt 20 connected to the first pulleys 110A and 110B and the second pulleys 210A and 210B; and first elastic members 120A and 120B elastically limiting movement of the first pulleys 110A and 110B in an axial direction, wherein any one of the first shaft 100 and the second shaft 200 has driving force transferred thereto, and the first pulleys 110A and 110B are a pair of movable pulleys.

Here, the second pulleys 210A and 210B coupled to the second shaft 200 may be a pair of movable pulleys or fixed pulleys. Hereinafter, the case in which the second pulleys 210A and 210B are a pair of movable pulleys will be first described.

As shown in FIGS. 3A to 4, the first pulleys 110A and 110B and the second pulleys 210A and 210B have a dish shape, and a pair of first pulleys 110A and 110B and a pair of second pulleys 210A and 210B are inserted into the first shaft 110 and the second shaft 200, respectively, so that rear surfaces thereof having a dish shape face each other. Therefore, the first pulleys 110A and 110B and the second pulleys 210A and 210B may be moved toward the first shaft 100 and the second shaft 200, respectively, such that a pulley interval may be adjusted. In addition, since a pair of movable pulleys is disposed on the respective shafts, rotational forces to the respective movable pulleys are the same as each other through frictional force between the shaft and the movable pulleys as the shafts are rotated, such that a torque difference between the pulleys does not occur. As a result, a slip between the movable pulleys and the belt 20 is decreased.

Here, the first pulleys 110A and 110B and the second pulleys 210A and 210B include movable hubs 110 formed at the center thereof, such that the first shaft 100 and the second shaft 200 may be inserted into the movable hubs 110, respectively. The reason why the movable hubs 111 are formed as described above is to reinforce central portions of the pulleys having weak strength and prevent the first shaft 100 and the second shaft 200 from being damaged.

With the above-mentioned configuration, when the pulley interval decreases, an effective radius r of the belt 20 increases, and when the pulley interval increases, the effective radius r of the belt 20 decreases. Therefore, the pulley interval is adjusted, thereby making it possible to implement a continuously variable transmission.

The belt 20 serves to transfer tension generated by a torque of a driving source 10 to a driven shaft to rotate the driven shaft.

In order to increase power transfer efficiency, generation of the slip between the belt 20 and the pulley should be minimized. To this end, it is preferable that a V belt in which an angle between the first pulleys 110A and 110B and an angle between the second pulleys 210A and 210B are the same as each other is used as the belt 20 so that it is closely adhered well when it is wound around.

The first elastic members 120A and 120B and second elastic members 220A and 220B serve to suppress movement of the first pulleys 110A and 110B and the second pulleys 210A and 210B in an axial direction, respectively, and store elastic energy according to displacements of the first pulleys 110A and 110B and the second pulleys 210A and 210B, respectively.

In the case in which the first shaft 100 is a driving shaft to which the driving source 10 is connected, when the first shaft 100 is not rotated, the belt 20 is closely adhered between the first pulleys 110A and 110B coupled to the first shaft 100 by elastic force of the first elastic members 120A and 120B, and when a torque is applied to the first shaft 100, the first pulleys 110A and 110B are rotated to rotate the belt 20. In this case, tension of the belt 20 increases. When the tension of the belt 20 exceeds a predetermined value, the first pulleys 110A and 110B are moved in the axial direction by overcoming the elastic force of the first elastic members 120A and 120B. In this case, elastic energy is accumulated in the first elastic members 120A and 120B by a movement amount of the first pulleys. When the tension subsequently decreases, the first elastic members 120A and 120B restore the first pulleys 110A and 110B to control the pulley interval.

The second elastic members 220A and 220B also move the second pulleys 210A and 210B in the axial direction as in a driving side according to an increase/decrease in tension of the belt 20 to control the pulley interval.

It is preferable that the first elastic members 120A and 120B and the second elastic members 220A and 220B are cylindrical compression springs or extension springs having one ends each contacting a flange 136 fixed to the shafts and the other ends each contacting the first pulleys 110A and 110B and the second pulleys 210A and 210B. However, various kinds of springs may be used as the first elastic members 120A and 120B and the second elastic members 220A and 220B according to a situation.

In the continuously variable transmission according to the present invention, as shown in FIG. 5, a pair of first pulleys 110A and 110B and a pair of second pulleys 210A and 210B face each other, respectively, and first rotation guides 130A and 130B and second rotation guides 230A and 230B are further coupled to the first pulleys 110A and 110B and the second pulleys 210A and 210B, respectively.

The first rotation guides 130A and 130B and the second rotation guides 230A and 230B, which are components guiding the first pulleys 110A and 110B and the second pulleys 210A and 210B so as to be moved in the axial direction while being rotated, are typically cams. The first pulleys 110A and 110B and the second pulleys 210A and 210B to which the first rotation guides 130A and 130B and the second rotation guides 230A and 230b are coupled, respectively, are inserted into the first shaft 100 and the second shaft 200, respectively, and are supported in the axial direction by the first elastic members 120A and 120B and the second elastic members 220A and 220B, respectively. In addition, the first elastic members 120A and 120B and the second elastic members 220A and 220B are supported by the flange 136, respectively.

The first rotation guides 130A and 130B and the second rotation guides 230A and 230B may include a fixed cam 132 provided with a bent part 131 to thereby be fixed to the first shaft 100 and the second shaft 200 and a rotating cam 134 coupled to the first pulleys 110A and 110B and the second pulleys 210A and 210B to thereby move along the bent part 131. Therefore, the fixed cam 132 and the rotating cam 134 are inserted into the first shaft 100 and the second shaft 200, respectively, and the first pulleys 110A and 110B and the second pulleys 210A and 210B are elastically supported in the axial direction by the respective elastic members supported by the flange 136 inserted into and fixed to the first shaft 100 and the second shaft 200.

Another example of first rotation guides 130A and 130B and second rotation guides 230A and 230B may be a fixed cam 132 provided with a guide protrusion 133 and a rotating cam 134 provided with a spiral guide hole 135 or a fixed cam 132 provided with a spiral guide groove 135 and a rotating cam 134 provided with a guide protrusion 133. In addition, the guide protrusion 133 may be directly formed on the first shaft 100 and the second shaft 200, and the rotating cam 134 may be inserted into the guide protrusion 133.

Although the fixed cam 132 and the rotating cam 134 may also be directly formed at the movable hubs 111 of the respective movable pulleys, it is preferable that they are formed at separate cylindrical members to facilitate fault repair or component replacement.

In the case in which the first shaft 100 is a driving shaft, when the first shaft 100 is rotated, a load torque is applied to the first rotation guides 130A and 130B. When a component of the load torque in the axial direction is larger than the elastic force of the first elastic members 120A and 120B, the first pulleys 110 and 110B become distant from each other until two forces become equal. In this case, the rotating cam 134 moves along the bent part 131 or the guide protrusion 133, such that the first pulleys 110 and 110B become distant from each other.

Meanwhile, the belt 20 is wound by the rotation of the first shaft 100, such that the a load torque is also applied to second rotation guides 230A and 230B to move the second pulleys 210A and 210B. Since large tension of the belt 20 is generated in the first shaft 100 to decrease a rotation radius, the tension of the belt 20 is relatively decreased in the second shaft 200, such that the fixed cam 132 pushes the second pulleys 210A and 210B coupled to the rotating cam 134 due to the elastic force of the second elastic members 220A and 220B. Therefore, the pull interval is decreased from an initial state in which the second pulleys 210A and 210B are spaced apart from each other.

Through the above-mentioned configuration, in the continuously variable transmission according to the present invention, the first pulleys 110A and 110B are positioned at points at which the tension of the belt 20 and the elastic force of the first elastic members 120A and 120B are in equilibrium under any driving condition. Then, when the tension of the belt 120 is changed as the driving condition is changed, the first pulleys 110A and 110B move along the shafts to other points at which the changed tension of the belt 20 and the elastic force of the first elastic members 120A and 120B are in equilibrium, thereby changing the pulley interval. Similar to the first pulleys 110A and 110B, the second pulleys 210A and 210B are positioned at points at which the tension of the belt 20 and the elastic force of the second elastic members 220A and 220B are in equilibrium and move along the shaft as the driving condition is changed, thereby changing the pulley interval.

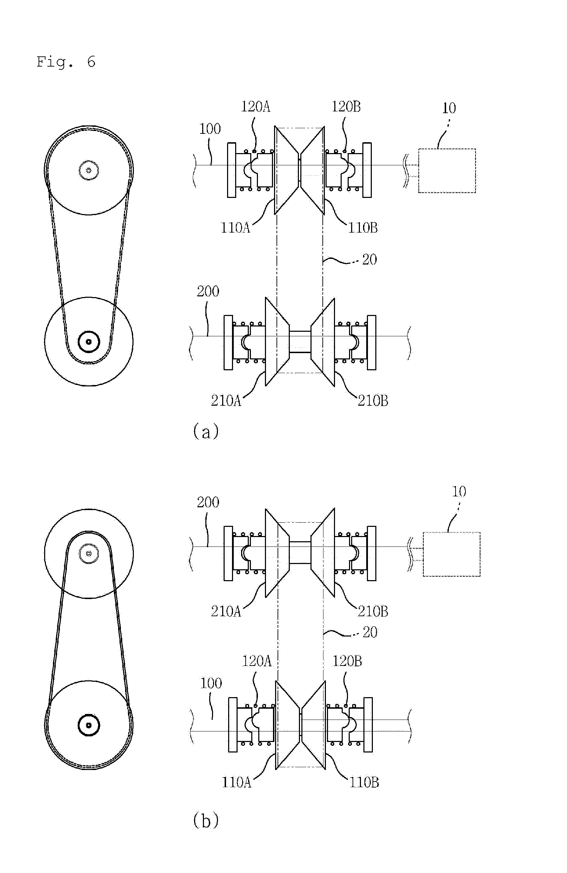

FIGS. 6A and 6B are schematic views showing a continuous variable transmission process of the continuously variable transmission according to the present invention.

In FIG. 6 showing the case in which the first shaft 100 is a driving shaft, the second shaft 200 is a driven shaft, and a pulley of the second shaft 200 is a movable pulley, the first pulleys 110A and 110B and the second pulleys 210A and 210B are disposed at positions corresponding to each other and are inserted into the first shaft 100 and the second shaft 200, respectively, and the first elastic members 120A and 120B and the second elastic members 220A and 220B elastically support the first pulleys 110A and 110B and the second pulleys 210A and 210B, respectively, and allow operations as opposed to each other to be made at a driving side and a driven side. As an example, when the first elastic members 120A and 120B closely adhere the first pulleys 110A and 110B to each other, the second elastic members 220A and 220B space the second pulleys 210A and 210B apart from each other.

The reason why the first rotation guides 130A and 130B and the second rotation guides 230A and 230B are formed at the first pulleys 110A and 110B and the second pulleys 210A and 210B, respectively, is that it is not easy to apply force enough to push up the belt 20 only with the elastic force of the elastic member in the case in which driving force of the driving source 10 is weak.

The first rotation guides 130A and 130B and the second rotation guides 230A and 230B are solutions to this problem. In the rotation guides, the rotating cam 134 is rotated with respect to the fixed cam 132 when the movable pulley is rotated, such that the rotating cam 134 and the fixed cam 132 become distance from each other, thereby reinforcing force pushing the movable pulley by the elastic force of the elastic member. When the tension of the belt 20 becomes stronger than the elastic force of the elastic member, the rotating cam 134 is again integrated with the fixed cam 132.

Since the first pulleys 110A and 110B and the second pulleys 210A and 210B move in the axial direction while being rotated along the respective rotating guides using axial forces of the first elastic members 120A and 120B and the second elastic members 220A and 220B, respectively, the belt 20 may be easily pushed up or down with small axial force.

Therefore, in the case in which a load torque of the driving side (or the tension of the belt) is small such as at the time of stopping the driving, at the time of normal driving, or the like, as shown in FIG. 6A, the elastic force generated in the first pulleys 110A and 110B by the first elastic members 120A and 120B is larger than the axial force of the first pulleys 110A and 110B by the tension of the belt 20, such that the first pulleys 110A and 110B become close to a central portion of the first shaft 100 while being rotated. Therefore, a pulley interval of the driving side is minimized (an effective radius of the driving side is maximized), and the driven side is operated as opposed to the driving side, such that a pulley interval of the driven side is maximized (an effective radius of the driven side is minimized).

To the contrary, in the case in which the load torque of the driving side (or the tension of the belt) is large such as at the time of rapid driving, at the time of rapidly stopping the driving, or the like, as shown in FIG. 6B, the axial force generated in the first pulleys 110A and 110B by the tension of the belt 20 is larger than the elastic force by the first elastic members 120A and 120B, such that the first pulleys 110A and 110B become distant from the central portion of the first shaft 100 while being rotated. Therefore, the pulley interval of the driving side is maximized (the effective radius of the driving side is minimized), and the driven side is operated as opposed to the driving side, such that the pulley interval of the driven side is minimized (the effective radius of the driven side is maximized).

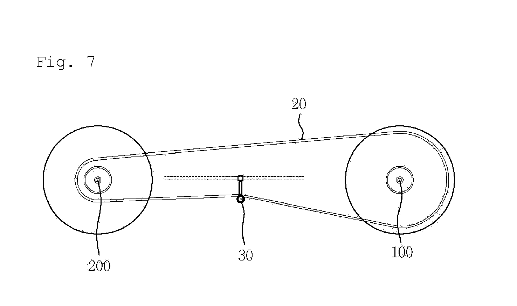

FIG. 7 is a front view showing the continuous variable transmission including an idler according to the present invention.

As shown in FIG. 7, the continuous variable transmission according to the present invention may further include the idler 30. In the case in which the driving force generated from the driving source 10 becomes suddenly strong or weak, the pulley interval of the driving side and the pulley interval of the driven side are not complementarily changed, a slip may occur between the belt 20 and the pulleys or the belt 20 may be stripped from the pulleys.

In order to block these problems in advance, the continuous variable transmission according to the present invention includes the idler 30 having a spring. Therefore, a relaxation side, which is a lower end portion of the belt 20, is continuously pushed up by force of the spring of the idler 30, thereby making it possible to allow the belt 20 to be always closely adhered between the pulleys.

Next, the case in which the second pulleys 210A and 210B of the continuous variable transmission according to the present invention are fixed pulleys will be described.

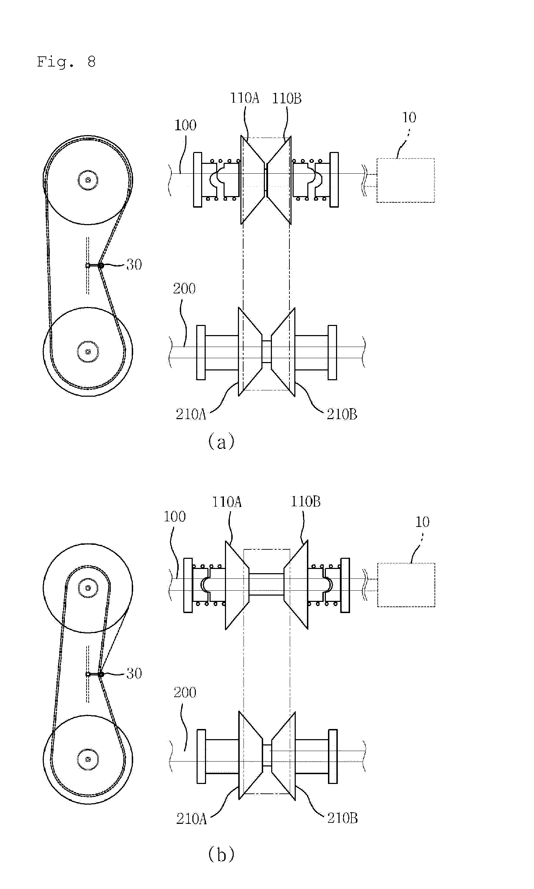

FIGS. 8A to 9B are schematic views showing a continuously variable transmission according to exemplary embodiments of the present invention. In FIGS. 8A and 8B showing the case in which the first shaft 100 is a driving shaft, the second shaft 200 is a driven shaft, and the second pulleys 210A and 210B are fixed pulleys, the belt 20 is closely adhered between the second pulleys 210A and 210B maintained at a fixed pulley interval, and the pulley interval is adjusted only using the first pulleys 110A and 110B of the first shaft 100, such that transmission is implemented. In FIG. 8A showing the case in which the load torque of the driving side (or the tension of the belt) is small such as at the time of stopping the driving, at the time of normal driving, or the like, the pulley interval of the driving side is minimized (the effective radius of the driving side is maximized). To the contrary, in FIG. 8B, the pulley interval of the driving side is maximized (the effective radius of the driven side is minimized).

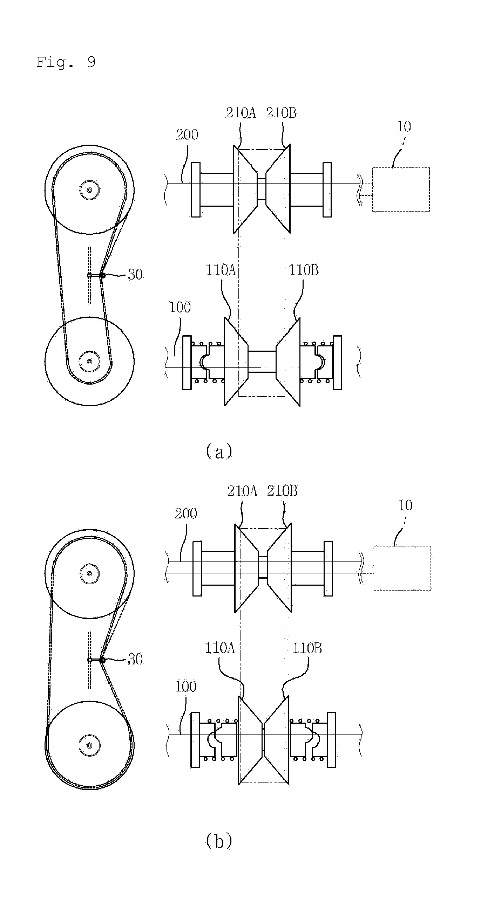

In FIGS. 9A and 9B showing the case in which the first shaft 100 is a driven shaft, the second shaft 200 is a driving shaft, and the second pulleys 210A and 210B are fixed pulleys, the driving source 10 exists in the second shaft 200, unlike FIG. 8 in which the driving source 10 exists in the first 100.

Therefore, the continuously variable transmission having a relatively simple configuration and capable of economically and effectively performing transmission may be provided.

With the continuously variable transmission according to the present invention, the pair of movable pulleys are used at the driving shaft and the driven shaft, thereby making it possible to decrease a torque difference between the pulleys, the movable pulleys are rotated in the same direction as a rotation direction of the belt by the elastic members to minimize the slip between the movable pulleys and the belt, thereby making it possible to prevent power loss, and a situation in which a driver should apply excessive force to a pedal at the time of start or at the time of driving in a slope or the driver should perform a transmission operation one by one may be solved.

## Claims

1. A continuously variable transmission comprising:
first pulleys coupled to a first shaft;
second pulleys coupled to a second shaft;
a belt connected to the first pulleys and the second pulleys; and
first elastic members elastically limiting movement of the first pulleys in an axial direction,
wherein any one of the first shaft and the second shaft has driving force transferred thereto, and
the first pulleys are a pair of movable pulleys.

2. The continuously variable transmission of claim 1, further comprising second elastic members elastically limiting movement of the second pulleys in the axial direction,
wherein the second pulleys are a pair of movable pulleys.

3. The continuously variable transmission of claim 1, wherein the second pulleys are a pair of fixed pulleys.

4. The continuously variable transmission of any one of claims 1 to 3, further comprising first rotation guides having one sides coupled to the first shaft and the other sides coupled to the first pulleys, respectively.

5. The continuously variable transmission of claim 2, further comprising second rotation guides having one sides coupled to the second shaft and the other sides coupled to the second pulleys, respectively.

6. The continuously variable transmission of claim 4, wherein the first rotation guides include:
a fixed cam provided with a bent part to thereby be fixed to the first shaft; and
a rotating cam coupled to the first pulleys to thereby be rotated along the bent part.

7. The continuously variable transmission of claim 5, wherein the second rotation guides include:
a fixed cam provided with a bent part to thereby be fixed to the second shaft; and
a rotating cam coupled to the second pulleys to thereby be rotated along the bent part.

8. The continuously variable transmission of claim 4, wherein the first rotation guides include:
a fixed cam provided with a guide protrusion; and
a rotating cam provided with a guide hole into which the guide protrusion is inserted.

9. The continuously variable transmission of claim 5, wherein the second rotation guides include:
a fixed cam provided with a guide protrusion; and
a rotating cam provided with a guide hole into which the guide protrusion is inserted.

10. The continuously variable transmission of any one of claims 1 to 3, wherein the first elastic members are springs.

11. The continuously variable transmission of claim 2, wherein the second elastic members are springs.

12. The continuously variable transmission of any one of claims 1 to 3, further comprising an idler installed in the belt.
